# EUROPEAN PATENT SPECIFICATION

(11) **EP 0 692 374 B1**
(45) Date of publication and mention of the grant of the patent: **17.06.1998**
(21) Application number: 95304811.3
(22) Date of filing: 10.07.1995
(51) Int. Cl.: B32B 27/34, B65D 65/40

(54) **Abuse resistant shrink film**
Verschliessbeständige Schrumpffolie
Feuille rétractable résistant à l'usure

(30) Priority: 13.07.1994 US 274607
(43) Date of publication of application: 17.01.1996
(73) Proprietor: W.R. GRACE & CO.-CONN., New York New York 10036-7794 (US)
(72) Inventor: Lambert, William Scott, Simpsonville, South Carolina 29681 (US)
(74) Representative: Jones, Helen Marjorie Meredith

(56) References cited:
- EP-A- 0 236 099
- WO-A-94/19186
- WO-A-95/07180
- US-A- 4 407 873

## Description

This invention relates to oriented thermoplastic films for packaging applications, and more particularly relates to coextruded multilayer, oriented films with oxygen barrier characteristics and improved abuse resistance.

Thermoplastic film, and especially polyolefin materials, have been used in the past to package various articles including perishable food products which require protection from the environment, resistance to physical and environmental abuse during storage and distribution, and an aesthetic and attractive appearance. Optical properties such as high gloss, high clarity, and low haze contribute to the aesthetic consumer appeal of products wrapped in such packaging materials. Abuse resistance properties are important to package integrity and, for perishable food products, are essential to the viability of the packaged product.

Oxygen barrier characteristics are required to provide extended shelf life for the packaged product in the case of food items, and various materials have been used to provide lower gas permeability and thereby reduce the oxygen transmission of the film. For example, ethylene vinyl alcohol copolymer (EVOH) has been known for some time as a good oxygen barrier material, and has been used in the past in conjunction with multilayer packaging films, as described below in several patent publications. EVOH has also proved to be a good barrier to odors or fragrances.

A shrink feature may be imparted to a thermoplastic film by orientation of the film during its manufacture. This shrink feature allows the film to shrink or, if restrained, create shrink tension within the packaging film upon exposure to heat, for example, in a hot water bath or by exposure to hot air. In a typical process, manufactured film is stretched in either the machine direction or perpendicular to the machine direction, or both, i.e., in the longitudinal and transverse directions respectively, in varying degrees to impart a desired degree of shrinkability to the film upon subsequent heating. After this stretching operation, the film is rapidly cooled to impart this latent shrinkability to the resulting film. Shrinkable film provides a tight, smooth appearance to a product wrapped in such film, as well as some added toughness in order to protect the packaged product from abuse.

Of interest is U.S. Patent No. 4,398,635 issued to Hirt and disclosing a medication package in which a coextruded multiple layer sheet may have a structure including a layer of ethylene vinyl alcohol copolymer sandwiched between adjacent layers of nylon, and in which one of the nylon layers may be further adhered to a tie resin. The nylon layers may form either an outside surface or, in one example, internal layers with additional layers of polymeric materials added to each side of the sandwich structure.

Of interest is U.S. Patent No. 4,355,721 issued to Knott et al. and disclosing a coextruded multilayer sheet having a first layer of nylon, an EVOH barrier layer, another layer of nylon, an adhesive layer, and another outside layer of, for example, high density polyethylene.

Of interest is U.S. Patent No. 4,284,674 issued to Sheptak and disclosing a multilayer film having a core layer of ethylene vinyl alcohol copolymer adhered on each side to nylon, each nylon layer in turn being adhered to a chemically modified polyolefin, and a further layer of primer material suitable to adhere the modified polyolefin to an outer layer of polypropylene or other materials suitable for conveying toughness, flexcrack resistance and moisture barrier properties to the multiply film.

U.S. Patent No. 4,407,873 issued to Christensen et al., discloses a packaging material for retort applications including a heat seal layer of linear low density polyethylene, a second layer of linear low density polyethylene with optionally 0% to 80% medium density polyethylene blended into the second layer, a third layer of anhydride modified medium density polyethylene, a fourth layer of nylon, a fifth layer of ethylene vinyl alcohol copolymer, and a sixth layer of nylon.

Of interest is U.S. Patent No. 4,501,798 issued to Koschak et al., disclosing the use of a blend of EVOH and nylon in an unbalanced multiple layer polymer film, also including either linear low density polyethylene or ethylene vinyl acetate copolymer in a sealant layer. Adhesive layers of preferably anhydride derivatives are also present.

Also of interest is U.S. Patent No. 4,755,419 (& EP-A-0,236,099) issued to Shah which discloses a multilayer oriented film having a core barrier layer of ethylene vinyl alcohol copolymer, two intermediate layers sandwiching the barrier layer each comprising a copolyamide, outer skin layers which may be either a blend of linear low density polyethylene, linear medium density polyethylene and ethylene vinyl acetate, or a blend of polypropylene and an ethylene propylene copolymer. The skin layers are adhered to the copolyamide layers by means of modified polymeric adhesive materials. Films produced in accordance with the '419 patent have a combination of oxygen barrier properties, shrinkability, and adequate toughness for many applications. However, the intermediate layers of nylon 6,66 require such films to be oriented at relatively high orientation temperatures causing processing difficulties and less than ideal optics.

WO-A-9507180 (which was not published until after the priority date of the present case) discloses multilayer films comprising a barrier layer, two core layers comprising polyamides and sealable outer polymeric skin layers. Blends of polyamides may be used in the core layers. Suggested polyamides include homopolyamides and copolyamides.

In WO-A-9419186 (which was not published until after the priority date of the present case) describes multilayer films comprising a barrier layer, two core layers comprising a blend of different polyamides and sealable outer polymer skin layers. The polyamides may be copolyamides. The films are said to have good retortable properties, and are assumed not to be heat shrinkable, therefore.

### SUMMARY OF THE INVENTION

It is an object of the present invention to provide a multilayer, heat shrinkable film having good oxygen barrier properties, good optical properties and improved abuse resistance over the films of the prior art.

It is a further object of the present invention to provide such a film structure in as thin a gauge as is practicable for reduced packaging volume and cost efficiency.

These as well as other objects are achieved by providing a multilayer, heat shrinkable film comprising a barrier layer; two core layers adhered to the barrier layer, each of said core layers comprising a blend of two differing copolyamides; and sealable outer polymeric skin layers.

Such objects are also achieved by providing a multilayer, heat shrinkable film comprising a barrier layer comprising a blend of an ethylene vinyl alcohol copolymer and a copolyamide; two core layers directly adhered to the barrier layer, each of said core layers comprising a blend of two differing copolyamides, one of said copolyamides being substantially equivalent in chemical composition to the copolyamide present in the barrier layer; and sealable outer skin layers.

### DEFINITIONS

As used herein, the term "monomer" refers to a relatively simple compound, usually containing carbon and of low molecular weight, which can react to form a polymer by combination with itself or with other similar molecules or compounds.

As used herein, the term "comonomer" refers to a monomer which is copolymerized with at least one different monomer in a copolymerization reaction, the result of which is a copolymer.

As used herein, the term "polymer" refers to the product of a polymerization reaction, and is inclusive of homopolymers, copolymers, terpolymers, etc.

As used herein, the term "homopolymer" is used with reference to a polymer resulting from the polymerization of a single monomer, i.e., a polymer consisting essentially of a single type of repeating unit.

As used herein, the term "copolymer" refers to polymers formed by the polymerization reaction of at least two different monomers. For example, the term "copolymer" includes the copolymerization reaction product of ethylene and an α-olefin, such as 1-hexene. However, the term "copolymer" is also inclusive of, for example, the copolymerization of a mixture of ethylene, propylene, 1-hexene, and 1-octene.

As used herein, the term "differing", when used in defining the relative nature of two or more polymers or copolymers, refers to differences in any one or more of a variety of attributes such as chemical composition, comonomer composition, relative comonomer percentages, molecular weight, molecular weight distribution, melt flow, density, or homogeneity.

As used herein, the term "copolymerization" refers to the simultaneous polymerization of two or more different monomers.

As used herein, the phrase "heterogeneous polymer" refers to polymerization reaction products of relatively wide variation in molecular weight and relatively wide variation in composition distribution, i.e., polymers made, for example, using conventional Ziegler-Natta catalysts. Such polymers typically contain a relatively wide variety of chain lengths and comonomer percentages.

As used herein, the phrase "heterogeneous catalyst" refers to a catalyst suitable for use in the polymerization of heterogeneous polymers, as defined above. Heterogeneous catalysts are comprised of several kinds of active sites which differ in Lewis acidity and steric environment. Ziegler-Natta catalysts are heterogeneous catalysts. Examples of Ziegler-Natta heterogeneous systems include metal halides activated by an organometallic co-catalyst, such as titanium chloride, optionally containing magnesium chloride, complexed to trialkyl aluminum and may be found in patents such as U.S. Patent No. 4,302,565, to GOEKE, et. al., and U.S. Patent No. 4,302,566, to KAROL, et. al.

As used herein, the phrase "homogeneous polymer" refers to polymerization reaction products of relatively narrow molecular weight distribution and relatively narrow composition distribution. Such polymers exhibit a relatively even sequencing of comonomers within a chain, the mirroring of sequence distribution in all chains, and the similarity of length of all chains, and are typically prepared using metallocene, or other single-site type catalysis.

As used herein, the phrase "homogeneous catalyst" refers to a catalyst suitable for use in the polymerization of homogeneous polymers, as defined above. Homogeneous catalysts are also referred to as "single site catalysts", due to the fact that such catalysts typically have only one type of catalytic site, which is believed to be the basis for the homogeneity of the polymers produced by means of these catalysts.

As used herein, the term "polyolefin" refers to any polymerized olefin, which can be linear, branched, cyclic, aliphatic, aromatic, substituted, or unsubstituted.

As used herein, the phrase "ethylene alpha-olefin copolymer", and "ethylene/α-olefin copolymer", refer to such heterogeneous materials as linear low density polyethylene (LLDPE), linear medium density polyethylene (LMDPE) and very low and ultra low density polyethylene (VLDPE and ULDPE); and homogeneous polymers such as metallocene catalyzed polymers such as EXACT (TM) materials supplied by Exxon, and TAFMER (TM) materials supplied by Mitsui Petrochemical Corporation. These materials generally include copolymers of ethylene with one or more comonomers selected from C4 to C10 alpha-olefins such as butene-1 (i.e., 1-butene), hexene-1, octene-1, etc. in which the molecules of the copolymers comprise long chains with relatively few side chain branches or cross-linked structures. This molecular structure is to be contrasted with conventional low or medium density polyethylenes which are more highly branched than their respective counterparts. LLDPE, as used herein, has a density usually in the range of from about 0.915 grams per cubic centimeter to about 0.925 grams per cubic centimeter, whereas LMDPE has a density usually in the range of from about 0.926 g/cc to about 0.94 g/cc and VLDPE or ULDPE has a density usually below about 0.915 g/cc. Other ethylene/α-olefin copolymers, such as the long chain branched homogeneous ethylene/α-olefin copolymers available from the Dow Chemical Company, known as AFFINITY (TM) resins, are also included as another type of ethylene alpha-olefin copolymer useful in the present invention.

As used herein, "EVOH" refers to ethylene vinyl alcohol copolymer. EVOH includes saponified or hydrolyzed ethylene vinyl acetate copolymers, and refers to a vinyl alcohol copolymer having an ethylene comonomer, and prepared by, for example, hydrolysis of vinyl acetate copolymers, or by chemical reactions with polyvinyl alcohol. The degree of hydrolysis is preferably at least 50% and more preferably at least 85%.

As used herein, the term "barrier", and the phrase "barrier layer", as applied to films and/or film layers, are used with reference to the ability of a monolayer film or a multilayer film to serve as a barrier to one or more gases. Oxygen barrier layers can comprise, for example, polymerized ethylene vinyl alcohol, polyvinyl chloride, polyvinylidene chloride, etc., as known to those of skill in the art.

As used herein, the term "polyamide" refers to high molecular weight polymers having amide linkages along the molecular chain, and refers more specifically to synthetic polyamides such as nylons. Furthermore, such term encompasses both polymers comprising repeating units derived from monomers, such as caprolactam, which polymerize to form a polyamide, as well as copolymers of two or more amide monomers, also referred to as "copolyamides" herein, and copolymers derived from the copolymerization of caprolactam with a comonomer which when polymerized alone does not result in the formation of a polyamide.

As used herein, the term "ethylene vinyl acetate copolymer" or "EVA" is used to refer to a copolymer formed from ethylene and vinyl acetate monomers wherein the ethylene derived units in the copolymers are present in major amounts, preferably between about 60% and 98% by weight and the vinyl acetate derived units in the copolymer are present in minor amounts, preferably between about 2% and 40% by weight.

As used herein, the term "polypropylene" refers to any polymer comprising propylene polymerization units, regardless of whether the polymer is a homopolymer or a copolymer, and further includes blends of such homopolymers and copolymers. The phrase "propylene polymerization units", as used herein, refers to polymerization units in a polymer chain, the repeating units being derived from the polymerization of unsubstituted propylene monomer and/or substituted propylene polymer, the double bond being opened in the polymerization reaction.

As used herein, the term "ethylene propylene copolymer" or "EPC" refers to polypropylene copolymerized with small amounts of ethylene comonomer. The term "ethylene propylene butene terpolymer" or "EPB" refers to terpolymer incorporating these three comonomers in various percentages.

As used herein, the phrase "anhydride functionality" refers to any form of anhydride functionality, such as the anhydride of maleic acid, fumaric acid, etc., whether blended with one or more polymers, grafted onto a polymer, or copolymerized with a polymer, and, in general, is also inclusive of derivatives of such functionalities, such as acids, esters, and metal salts derived therefrom.

As used herein, the phrase "modified polymer", as well as more specific phrases such as "modified ethylene vinyl acetate copolymer", and "modified polyolefin" refer to such polymers having an anhydride functionality, as defined immediately above, grafted thereon and/or copolymerized therewith and/or blended therewith. Preferably, such modified polymers have the anhydride functionality grafted on or polymerized therewith, as opposed to merely blended therewith.

As used herein, the phrase "anhydride-containing polymer" refers to one or more of the following: (1) polymers obtained by copolymerizing an anhydride-containing monomer with a second, different monomer, and (2) anhydride grafted copolymers, and (3) a mixture of a polymer and an anhydride-containing compound.

As used herein, the phrase "internal layer" or "interior layer" refers to any film layer having its two principal surfaces adhered to other layers of the multilayer film.

As used herein, the phrase "outer layer" refers to any film layer, of a multilayer film, having only one of its principal surfaces directly adhered to another layer of the film.

As used herein, the phrase "directly adhered", as applied to film layers, is defined as adhesion of the subject film layer to the object film layer, without a tie layer, adhesive, or other layer therebetween. In contrast, as used herein, the word "adhered", as applied to film layers, is defined as adhesion of the subject film to the object film layer either directly or indirectly such as by use of a tie layer, an adhesive, an adhesive layer, or other layer therebetween. As used herein, the word "between", as applied to a film layer expressed as being between two other specified layers, includes both the subject layer being in direct adherence to two other layers, such as an A/B/C structure wherein B is between A and C and is also directly adhered to A and C, and the subject layer being indirectly adhered to two other layers, such as an A/B/C/D/E structure wherein C is between A and E but is not directly adhered to either A or E.

As used herein, the term "core", and the phrase "core layer", as applied to multilayer films, refer to any internal film layer which has a primary function other than serving as an adhesive or compatibilizer for adhering two layers to one another. Usually, the core layer or layers provide the multilayer film with a desired level of strength, i.e., modulus.

As used herein, the term "sealed" refers to any and all means of closing a package, such as heat sealing via hot air and/or heated bar, ultrasonic sealing, and even the use of clips on, for example, a shirred casing, etc.

As used herein, the phrase "sealant layer" or "sealing layer", with respect to multilayer films, refers to outer film layers, which are involved in the sealing of the film to itself or another layer. The phrase "sealant layer" as herein used refers only to outer layers, no matter how thin. With respect to packages having lap seals, the phrase "sealant layer" generally refers to both of the outer film layers of a package, as well as supporting layers adjacent these sealant layers.

As used herein, the phrase "tie layer" or "adhesive layer" refers to any internal layer having the primary purpose of adhering two layers to one another.

As used herein, the phrase "skin layer" refers to an outermost layer of a multilayer film in packaging a product, this skin layer being subject to abuse.

As used herein, the term "extrusion" is used with reference to the process of forming continuous shapes by forcing a molten plastic material through a die, followed by cooling or chemical hardening. Immediately prior to extrusion through the die, the relatively high-viscosity polymeric material is fed into a rotating screw of variable pitch, which forces it through the die.

As used herein, the term "coextrusion" refers to the process of extruding two or more materials through a single die with two or more orifices arranged so that the extrudates merge and weld together into a laminar structure before chilling, i.e., quenching. Coextrusion can be employed in film blowing, free film extrusion, and extrusion coating processes.

As used herein, the phrase "machine direction", herein abbreviated "MD", refers to a direction "along the length" of the film, i.e., in the direction of the film as the film is formed during extrusion and/or coating.

As used herein, the phrase "transverse direction", herein abbreviated "TD", refers to a direction across the film, perpendicular to the machine or longitudinal direction.

As used herein, the term "oriented" refers to a polymer containing material which has been stretched at an elevated temperature (the orientation temperature), followed by being "set" in the stretched configuration by cooling the material while substantially retaining the stretched dimensions. Upon subsequently heating unrestrained, unannealed, oriented polymer containing material to its orientation temperature, heat shrinkage is produced almost to the original unstretched, i.e., pre-oriented dimensions. More particularly, the term "oriented", as used herein, refers to oriented films, wherein the orientation can be produced in one or more of a variety of manners.

As used herein, the phrase "orientation ratio" refers to the multiplication product of the extent to which the plastic film material is expanded in several directions, usually two directions perpendicular to one another. Expansion in the machine direction is herein referred to as "drawing", whereas expansion in the transverse direction is herein referred to as "stretching". The degree of orientation is also referred to as the orientation ratio, or sometimes as the "racking ratio".

Although the majority of the above definitions are substantially as understood by those of skill in the art, one or more of the above definitions may be defined hereinabove in a manner differing from the meaning as ordinarily understood by those of skill in the art, due to the particular description herein of the present invention.

### DETAILED DESCRIPTION OF PREFERRED EMBODIMENTS

The present invention is directed to a multilayer film which is preferably palindromic or symmetrical in structure and which is produced by, for example, cast coextrusion methods, and subsequently oriented, preferably biaxially oriented, typically by means of a blown bubble process.

One preferred structure is a symmetrical seven layer film having a composition of A/B/C/D/C/B/A and a layer thickness ratio of 3/1/1/1/1/1/3 wherein D is a core barrier layer, C are core copolyamide blend layers, B are adhesive layers and A are sealable outer skin layers. An alternative preferred structure is a symmetrical nine layer film having a composition of A/A'/B/C/D/C/B/A'/A and a layer thickness ratio of 3/1/1/1/1/1/1/1/3 wherein A, B, C, and D are substantially as defined above and wherein A' is a subskin layer, substantially identical in composition to A, but does not include any additives which may optionally be present in A. The presence of the A' layer in the nine layer structure contributes to structural cohesiveness by reducing the incidence of interlayer delamination as is discussed in greater detail below.

The barrier layer of the present film is most preferably a blend of an ethylene vinyl alcohol (EVOH) copolymer and a copolyamide. A preferred copolyamide is a nylon 6,12 such as Grilon CF 6S^{(TM)} supplied by Emser which is a copolymer of caprolactam and laurolactam with a melting point of 266°F (130°C), and a density of 1.05 g/cc. Ethylene vinyl alcohol copolymer resins having an ethylene content of between about 28% and 49% by mole are preferred. Exemplary of such is Eval LC-F101A^{(TM)} from Eval of America. Generally, the EVOH comprises a major portion of the barrier blend and is most preferably about 90% by weight of the blend with the copolyamide comprising about 10% of the blend, although the EVOH may comprise from about 80% to about 100% of the barrier blend and the copolyamide may comprise about 0% to about 20% of the blend. The addition of a minor portion of a copolyamide having a melting point no more than 20°F (11°C) greater than that of EVOH aids in the processability of the barrier layer and, therefore, the overall film structure. The barrier layer is preferably between about 0.05 and 0.15 mil thick (1.3 to 3.8µm).

The core copolyamide blend layers are directly adhered to both surfaces of the barrier layer. Such layers are also preferably between about 0.05 and 0.15 mil (1.3 to 3.8µm) in thickness and comprise a blend of two differing copolyamides, one of which is identical to the copolyamide contained in the barrier layer. A preferred blend is nylon 6,66 and nylon 6,12 with the nylon 6,12 also being present in a minor amount in the barrier layer. A preferred nylon 6,66 is Ultramid C35^{(TM)} from BASF which is a copolymer of caprolactam, hexamethylene diamine and adipic acid which has a melting point of 385°F (196°C).

The core copolyamide blend layers are present in the film structure primarily for increasing abuse resistance. However, the presence of such layers gives rise to a variety of processing difficulties because of the higher melting temperatures and softening temperatures of such nylons as compared to the generally olefinic resins of the remainder of the structure. Basically, the nylon 6,66 component of preferred blends increases impact resistance and other abuse-related properties; but, with a melting temperature of 385°F (196°C) the nylon 6,66 is generally too stiff to orient in the overall structure. (See, Comparative Example 4, below.) Nylon 6,12, with a melting temperature of about 266°F (130°C), lowers the softening temperature of the blend, thereby allowing for the production of a highly abuse resistant film of exceptionally thin gauge. (See, for example, Example 3 and others comparing that film to the prior art.) Generally, it is preferred that the second copolyamide of the blend have a melting temperature at least about 50°F (28°C) less than that of the first copolyamide. More specifically, it is preferred that the second copolyamide have a melting temperature of less than about 320°F (160°C).

In one embodiment, the outer skin layers may comprise a blend of at least one ethylene alpha-olefin copolymer and an ethylene vinyl acetate copolymer. Preferably, such blend comprises two differing heterogeneous ethylene octene copolymers and an ethylene vinyl acetate copolymer. Preferred ethylene octene copolymers include those referred to as linear low density polyethylene, such as Dowlex 2045^{(TM)}, a heterogeneous ethylene octene copolymer having a density of 0.918 g/cc sold by Dow, and linear medium density polyethylene, such as Dowlex 2037^{(TM)},a heterogeneous ethylene octene copolymer having a density of 0.935 g/cc from Dow. A preferred ethylene vinyl acetate copolymer is PE 1335, which contains 3.3% by weight of vinyl acetate and is available from Rexene. The blend will typically contain small amounts of slip and antiblock agents and may also contain an antifog agent depending on the end-use application. Preferably, the blend comprises from about 40% to about 60% of LLDPE, from about 20% to about 30% of LMDPE and from about 20% to about 30% of EVA. The outer skin layers generally each comprise between 25% and 35% of the total film thickness.

In an alternative embodiment, the outer skin layers may comprise an ethylene propylene copolymer, polypropylene or blends thereof. The polypropylene may be in the form of a masterbatch with about 4% by weight of a silica-containing antiblock agent, about 5% by weight of amide waxes, and about 1% of a lubricating agent. The amide waxes and lubricating agent are well known in the art as slip agents. In a blend the polypropylene component of the outer skin layers preferably comprises from about 4% to about 15% by weight of the outer layers and most preferably about 8% by weight of such layers. A suitable ethylene propylene copolymer is Eltex P KS409^{(TM)} from Solvay, which contains 3.2% by weight of ethylene. A suitable polypropylene is PD 4062E-7 from Exxon. Hereagain, the outer skin layers are each preferably 25% to 35% of the total film thickness, although when intermediate "barefoot" subskin layers are preferred for improving interlayer adhesion as the A' layer discussed above the actual skin layers may comprise as little as 5% to 15% of the overall film thickness each with the intermediate layers each making up from about 25% to about 35% of the total thickness.

Generally, the skin layers or the skin layer/subskin layer pairs will be adhered to the copolyamide core layers by means of adhesive or tie layers. The particular adhesive polymeric material selected is dependent on the blend used in the outer layers. In general, preferred adhesives are those having blends of a graft copolymer of a linear low density polyethylene and at least one unsaturated, fused ring carboxylic acid anhydride blended with one or more resins such as linear low density polyethylene, although other adhesives such as low density polyethylene-based adhesives, can also be used. Adhesive layers will usually each comprise no more than from about 5% to about 15% of the total film thickness.

Films made in accordance with the present invention are preferably oriented out of hot air in a blown bubble type orientation process. Such films preferably have an orientation ratio of 3.4 to 3.6 in the longitudinal or machine direction and of 3.0 to 3.6 in the transverse direction.

The following examples are representative of the preferred embodiments of heat shrinkable films in accordance with the present invention. In order to evaluate such films the following tests were employed:
Tensile Strength: A measure of the force required to break a specimen of the film; measured by ASTM D 882.
Elongation: A measure of the percent extension required to break a specimen of the film; measured by ASTM D 882.
Modulus: The ratio of the change in force to the change in elongation in the straight line portion of an Instron Tensile Testing curve; measured by ASTM D 882 - Method A.
Tear Propagation: The force required to propagate a tear from a tiny slit made by a sharp blade in a specimen of the film; measured by ASTM D 1938.
Free Shrink: The percent dimensional change in a 10 cm. x 10 cm. specimen of film when subjected to a selected heat; measured by ASTM D 2732.
Ball Burst: The energy necessary to burst and penetrate a restrained specimen of the film; measured by ASTM D 3420.
Instrumented Impact: The energy necessary to puncture a restrained specimen of film, similar to ball burst, defined above. However, the Instrumented Impact Tester has the ability to measure the tensile/elongation curve to break. The "gradient" is the ratio of the change in force to change in elongation in the straight line portion of the curve. "Peak" is a measure of the maximum force exerted on the specimen to impart rupture. "Impact Energy" is a measure of the energy absorbed by the sample prior to rupture. Instrumented Impact is measured by ASTM D 3763.
Vibration: Packages wrapped in the inventive film are stacked in a box with four packages per level in four levels with each level separated by cardboard inserts. The box is placed on a vibration table and subjected to one hour of random vibration to simulate shipping conditions; measured by ASTM 4728.

The following resins were used in the production of multilayer films in accordance with the present invention as are set forth in the examples below:
- EPC1:: Eltex P KS409 from Solvay, an ethylene propylene copolymer with 3.2% by weight of ethylene.
- EPC2:: Tafmer XR107L^{(TM)} from Mitsui, a homogeneous ethylene propylene copolymer having a density of 0.89 g/cc.
- EPC3:: PD9302 from Exxon, an ethylene propylene copolymer with 3.3% by weight of ethylene.
- EPB:: KT-021P from Himont, an ethylene propylene butene terpolymer.
- PC1:: KS031P from Himont, a propylene copolymer having a density of 0.88 g/cc.
- PC2:: Tafmer P0480 from Mitsui, a propylene copolymer having a density of 0.87 g/cc.
- PP1:: a polypropylene-based masterbatch with antifog and antiblock additives.
- PP2:: PD 4062 E-7 from Exxon, a polypropylene.
- PP3:: a polypropylene-based masterbatch with antiblock additives.
- SPP:: EOD 9306 from Fina, a homogeneous syndiotactic polypropylene.
- ADH1:: Bynel CXA 4104^{(TM)} from DuPont, an anhydride grafted polyolefin in an ethylene butene copolymer.
- ADH2:: a propylene-based Admer^{(TM)} adhesive from Mitsui.
- ADH3:: an Admer adhesive from Mitsui.
- CPA1:: Ultramid C35 from BASF, a nylon 6,66.
- CPA2:: Grilon CF 6S from Emser, a nylon 6,12.
- EVOH1:: Eval LC-F101A from Eval of America, an ethylene vinyl alcohol copolymer.
- EVOH2:: Eval LC-E151A from Eval of America, an ethylene vinyl alcohol copolymer.
- EO1:: Dowlex 2045 from Dow, a heterogeneous ethylene octene copolymer having a density of 0.918 g/cc.
- EO2:: Dowlex 2037 from Dow, a heterogeneous ethylene octene copolymer having a density of 0.935 g/cc.
- EO3:: Affinity PL1880 from Dow, a homogeneous, branched ethylene octene copolymer having a density of 0.902 g/cc.
- EO4:: Affinity PL1840 from Dow, a homogeneous, branched ethylene octene copolymer having a density of 0.908 g/cc.
- EO5:: Affinity FM1570 from Dow, a homogeneous, branched ethylene octene copolymer having a density of 0.915 g/cc.
- EVA:: PE 1335 from Rexene, an ethylene vinyl acetate copolymer having 3.3% by weight of vinyl acetate.

### Example 1

A symmetrical seven layer structure was extruded and oriented out of hot air at 255°F (124°C) as described above. The resultant 1 mil (25 µm) film had the structure: 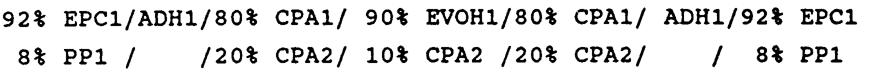 with a layer ratio of 3/1/1/1/1/1/3. Antifog and antiblock agents were provided in the polypropylene carrier of the skin layers. Although difficult to orient, the film of this example displayed greatly improved optics as compared to the film of Comparative Example 4.

### Example 2

A symmetrical seven layer structure was extruded and oriented out of hot air at 256°F (124°C) as described above. The resultant 1 mil (25µm) film had the structure: 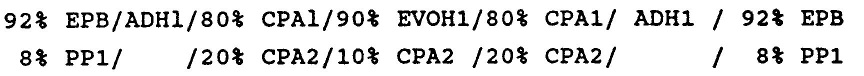 with a layer ratio of 3/1/1/1/1/1/3. Antifog and antiblock agents were provided in the polypropylene carrier of the skin layers. The present film structure proved easier to orient than the film of Example 1 but demonstrated some delamination between the skin layers and the respective adjacent adhesive layers.

### Example 3

A symmetrical seven layer structure was extruded, irradiated and oriented out of hot air at 255°F (124°C) as described above. The resultant 1 mil (25µm) film had the structure: 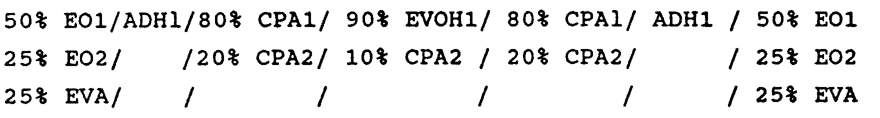 with a layer ratio of 3/1/1/1/1/1/3. The outer skin layers also included minor amounts of an antiblock and an antifog agent. No delamination was noted but optics were poor, most likely because the presence of the nylons required orientation at 255°F (124°C) which is relatively high compared to the melting points of the components of the skin layers. The present film also exhibited poor orientability.

### Comparative Example 4

For comparative purposes, the following symmetrical seven layer structure was extruded and irradiated: 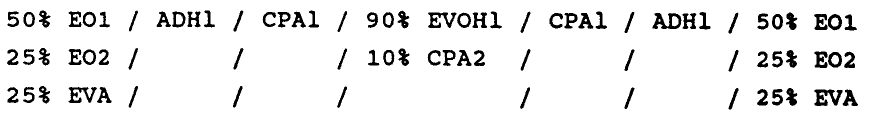 with a layer ratio of 3/1/1/1/1/1/3. The outer skin layers also included minor amounts of an antiblock and an antifog agent. Orientation was attempted at a variety of temperatures but was not successful.

### Example 5

A symmetrical seven layer structure was extruded and oriented out of hot air at 245°F (118°C) as described above. The resultant 1 mil (25µm) film had the structure: 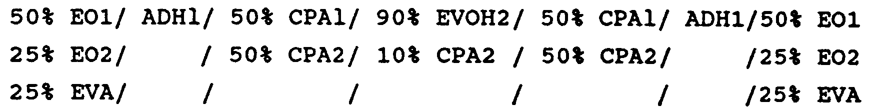 with a layer ratio of 3/1/1/1/1/1/3. The outer skin layers also included minor amounts of an antiblock and an antifog agent. This structure represented a successful attempt to lower the orientation temperature required in order to improve optics. The present structure displayed improved optical properties as compared to the film of Example 3. However, optics were poor compared to structures containing EPC skin layers such as the film of Example 1.

### Example 6

A symmetrical seven layer film structure having the same layer by layer composition and layer ratio as the film of Example 5 was oriented out of hot air at 235°F (113°C). This 10°F (5°C) reduction in orientation temperature resulted in a film with even better optical properties. However, it was difficult to maintain a stable orientation bubble at this lower orientation temperature.

### Example 7

A symmetrical seven layer structure was extruded and oriented out of hot air at 256°F (124°C) as described above. The resultant 1 mil (25µm) film had the structure: 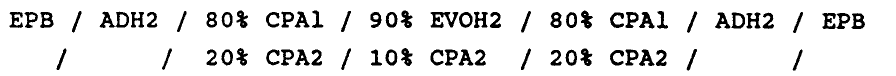 with a layer ratio of 3/1/1/1/1/1/3. No delamination was noted.

### Comparative Example 8

For comparative purposes, a symmetrical five layer structure was extruded, irradiated and oriented out of hot air at 241°F (116°C) as described above. The resultant 1.5 mil (3.8µm) film had the structure: 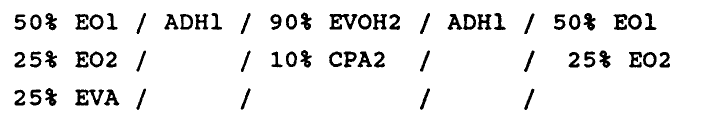 with a layer ratio of 3/1/1/1/3.

### Examples 9 - 14

The films of Examples 1 - 3, 5, 7 and Comparative Example 8 were tested for tensile strength, elongation, modulus, tear propagation, impact resistance, free shrink (FS) and shrink tension (ST). The results are shown in Table I below where for each structure the values for impact are first given in peak load in pounds and then in energy to break in foot-pounds.

The values in pounds can be converted to kgf by multiplying the figure in the table by the factor 0.4536 (or to N by multiplying by the factor 4.448).

The values in foot pounds can be converted to J by multiplying by 1.356.

The values in psi can be converted to Pa by multiplying by 6.895 x 10³.

**Table I**

| Ex. | Film of Ex. # | | Ten. psi x10⁻⁴ | Elong. x10⁻¹ | Mod. psi x10⁻⁵ | Tear gms. | Impact lb/ft.lb | FS % | ST psi |
|---|---|---|---|---|---|---|---|---|---|
| 9 | 1 | Long | 1.83 | 8.37 | 1.73 | 4.7 | 25.4 | 14 | 385 |
| | | Trans | 1.46 | 7.76 | 1.54 | 7.2 | 0.48 | 19 | 449 |
| 10 | 2 | Long | 1.75 | 8.34 | 1.87 | 8.5 | 27.7 | 15 | 383 |
| | | Trans | 1.72 | 7.70 | 1.98 | 8.3 | 0.54 | 18 | 503 |
| 11 | 3 | Long | 1.41 | 7.98 | 1.11 | 13.0 | 24.8 | 16 | 345 |
| | | Trans | 1.17 | 5.32 | 1.35 | 19.7 | 0.51 | 18 | 427 |
| 12 | 5 | Long | 1.65 | 9.95 | 1.08 | 20.6 | 25.4 | 20 | 398 |
| | | Trans | 1.27 | 6.38 | 1.06 | 15.3 | 0.53 | 29 | 531 |
| 13 | 7 | Long | 2.00 | 10.4 | 1.69 | 8.9 | 23.7 | 17 | 390 |
| | | Trans | 1.79 | 6.78 | 1.88 | 10.0 | 0.45 | 21 | 553 |
| 14 | 8 | Long | 0.98 | 6.28 | 1.08 | 34.3 | 27.8 | 13 | 255 |
| | | Trans | 0.98 | 6.12 | 1.52 | 30.9 | 0.56 | 28 | 532 |

Table I shows that tensile to break, percent elongation to break, and modulus of the inventive films all show improvements over the film of Comparative Example 8. No significant change is seen in impact properties. Thus, improved tensile and elongation and the same impact properties can be achieved by 1 mil (25µm) films produced in accordance with the present invention as compared to earlier 1.5 mil (38µm) films.

### Examples 15 & 16

Films of Example 2 and Comparative Example 8 were subjected to applications testing for a determination of abuse resistance. Ninety six packages were made manually of each of the two films by wrapping 1lb (0.45kg) blocks on meat trays with the film, sealing and heat shrinking and were then subjected to vibration testing under ASTM 4728. The results are given in Table II below.

**Table II**

| Ex. | Film of Ex. # | Total Packages | Total Abuse Failures | Tray Cuts | Bottom Abrasions | Seal Failures |
|---|---|---|---|---|---|---|
| 15 | 2 | 96 | 6 | 4 | 2 | 10 |
| 16 | 8 | 96 | 14 | 5 | 9 | 4 |

The seal failures demonstrated by the film of Example 2 were a result of the sealing parameters employed. That is, the sealing temperature was specifically set for the seal layers of the film of Comparative Example 8. Sealing parameters set specifically for the sealing layers of the film of Example 2 would most likely result in seal failures for the film of Comparative Example 8.

### Example 17

A symmetrical nine layer structure was extruded and oriented out of hot air at 252°F (122°C) as described above. The resultant 1 mil (25µm) film had the structure: 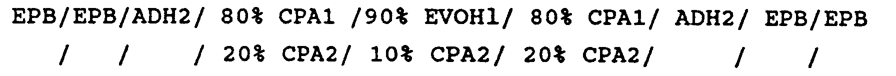 with a layer ratio of 3/1/1/1/1/1/1/1/3. An antifog and an antiblock agent were blended directly into the ethylene propylene butene copolymer of the outer skin layers. No delamination was noted.

### Example 18

A film was prepared as set forth in Example 7 having a thickness of 1.5 mils (38µm).

### Example 19

A symmetrical nine layer structure was extruded with the structure: 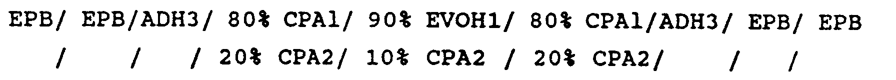 and a layer ratio of 3/1/1/1/1/1/1/1/3. An antifog and an antiblock agent were blended directly into the ethylene propylene butene copolymer of the outer skin layers. This structure would not orient under the conditions attempted.

### Example 20

A symmetrical nine layer structure was extruded and oriented out of hot air at 257°F (125°C) as described above. The resultant 1 mil (25µm) film had the structure: 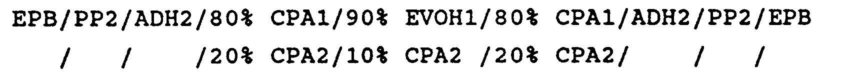 with a layer ratio of 3/1/1/1/1/1/1/1/3. An antifog and an antiblock agent were blended into the outer skin layers. No delamination was noted.

### Example 21

A symmetrical nine layer structure was extruded and oriented out of hot air at 252°F (122°C) as described above. The resultant 1 mil film (25µm) had the structure: 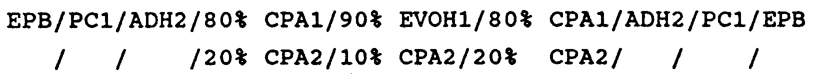 with a layer ratio of 3/1/1/1/1/1/1/1/3. An antifog and an antiblock agent were blended into the outer skin layers. No delamination was noted.

### Examples 22 - 24

The films of Examples 17, 20 and 21 were tested for tensile strength, elongation, modulus, tear propagation, impact resistance, free shrink and shrink tension. The results are shown in Table III below where for each structure the values for impact are first given in peak load in pounds (0.4536kgf) and then in energy to break in foot pounds (6.895 x 10³Pa). For comparative purposes the results of the same tests for Comparative Example 8 shown in Table I, above, are also listed in Table III. Conversion factors to metric units are as for Table 1 above.

**Table III**

| Ex. | Film of Ex. # | | Ten. psi x10⁻⁴ | Elong. %x10⁻¹ | Mod. psi x10⁻⁵ | Tear gms. | Impact lb/ft.lb | FS % | ST psi |
|---|---|---|---|---|---|---|---|---|---|
| 22 | 17 | Long | 1.81 | 8.34 | 2.12 | 7.9 | 32.9 | 14 | 374 |
| | | Trans | 1.97 | 6.60 | 2.32 | 12.9 | 0.65 | 18 | 487 |
| 23 | 20 | Long | 1.98 | 8.55 | 2.24 | 10.5 | 26.1 | 15 | 397 |
| | | Trans | 1.85 | 7.42 | 2.19 | 7.8 | 0.53 | 20 | 518 |
| 24 | 21 | Long | 1.90 | 8.72 | 2.10 | 6.4 | 24.5 | 16 | 388 |
| | | Trans | 1.81 | 7.30 | 2.10 | 4.1 | 0.48 | 22 | 499 |
| 14 | 8 | Long | 0.98 | 6.28 | 1.08 | 34.3 | 27.8 | 13 | 255 |
| | | Trans | 0.98 | 6.12 | 1.52 | 30.9 | 0.56 | 28 | 532 |

Table III shows that tensile to break, percent elongation to break, and modulus of the inventive films all show improvements over the film of Comparative Example 8. The film of Example 17 also demonstrated an improvement in impact properties. Thus, improved tensile and elongation and impact properties can be achieved by 1 mil (25µm) films produced in accordance with the present invention as compared to earlier 1.5 mil (38µm) films.

### Examples 25 & 26

Films of Example 18, a 1.5 mil (38µm) version of the film of Example 17, and Comparative Example 8 were subjected to applications testing for a determination of abuse resistance. Ninety six packages were made manually of each of the two films by wrapping 1lb (0.45kg) blocks on meat trays with the film, sealing and heat shrinking and were then subjected to vibration testing under ASTM 4728. The results are given in Table IV below.

**Table IV**

| Ex. | Film of Ex. # | Total Packages | Total Abuse Failures | Tray Cuts | Bottom Abrasions | Pinholes |
|---|---|---|---|---|---|---|
| 25 | 18 | 96 | 5 | 5 | 0 | 0 |
| 26 | 8 | 96 | 17 | 15 | 2 | 9 |

### Example 27

A symmetrical seven layer film was attempted having the structure: 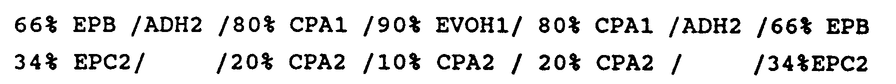 with a layer ratio of 3/1/1/1/1/1/3. Antiblock and antifog additives were blended directly into the ethylene propylene butene copolymer of the outer skin layers. The present structure could not be extruded under the conditions attempted.

### Example 28

A symmetrical seven layer film was attempted having the structure: 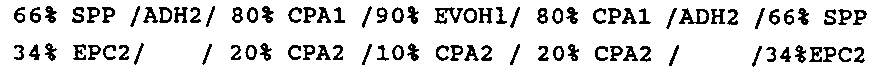 with a layer ratio of 3/1/1/1/1/1/3. Antiblock and antifog additives were blended directly into the syndiotactic polypropylene of the outer skin layers. The present structure could not be extruded under the conditions attempted.

### Example 29

A symmetrical nine layer film was attempted having the structure: 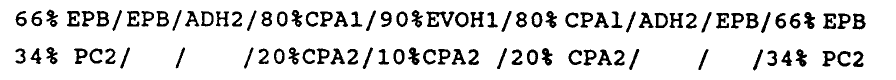 with a layer ratio of 3/1/1/1/1/1/3. Antiblock and antifog additives were blended directly into the ethylene propylene butene copolymer of the outer skin layers. The present structure could not be extruded under the conditions attempted.

### Example 30

A symmetrical nine layer structure was extruded and oriented out of hot air at 250°F (121°C) as described above. The resultant 1 mil (25µm) film had the structure: 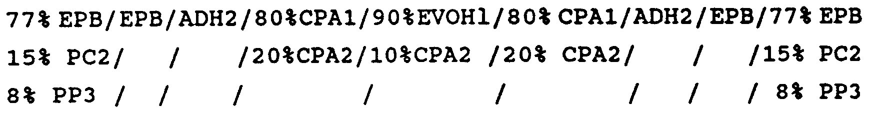 with a layer ratio of 2/2/1/1/1/1/1/2/2.

### Example 31

A symmetrical nine layer structure was extruded and oriented out of hot air at 250°F (121°C) as described above. The resultant 1 mil (25µm) film had the structure: 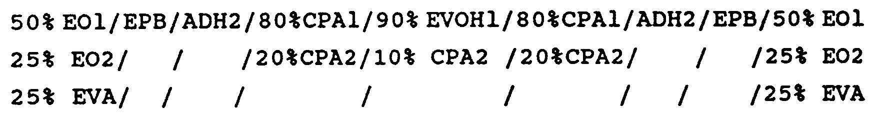 with a layer ratio of 1/3/1/1/1/1/1/3/1. An antifog and an antiblock agent were blended into the outer skin layers. Some delamination was noted between the skin layers and the adjacent ethylene/propylene/butene copolymer layers.

### Example 32

A symmetrical nine layer structure was extruded and oriented out of hot air at 250°F (121°C) as described above. The resultant 1 mil (215µm) film had the structure: 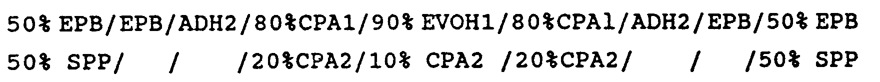 with a layer ratio of 1/3/1/1/1/1/1/3/1. An antifog and an antiblock agent were blended into the ethylene/propylene/butene copolymer of the outer skin layers. The present film processed well.

### Example 33

A symmetrical nine layer structure was extruded and oriented out of hot air at 250°F (121°C) as described above. The resultant 1 mil (25µm) film had the structure: 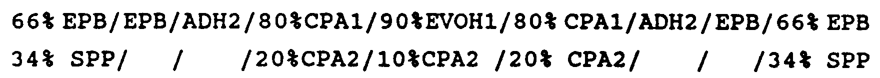 with a layer ratio of 1/3/1/1/1/1/1/3/1. An antifog and an antiblock agent were blended into the ethylene/propylene/butene copolymer of the outer skin layers. The present film was difficult to process at the orientation temperature attempted.

### Example 34

A symmetrical nine layer structure was extruded and oriented out of hot air at 250°F (121°C) as described above. The resultant 1 mil (25µm) film had the structure: 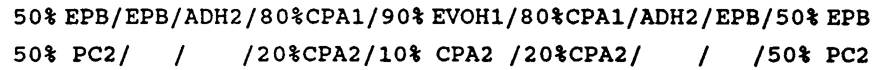 with a layer ratio of 1/3/1/1/1/1/1/3/1. An antifog and an antiblock agent were blended into the ethylene/propylene/butene copolymer of the outer skin layers. The present film was difficult to process at the orientation temperature attempted.

### Example 35

A symmetrical nine layer structure was extruded and oriented out of hot air at 250°F (121°C) as described above. The resultant 1 mil (25µm) film had the structure: 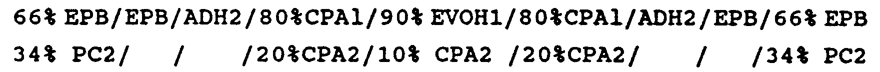 with a layer ratio of 1/3/1/1/1/1/1/3/1. An antifog and an antiblock agent were blended into the ethylene/propylene/butene copolymer of the outer skin layers. Some delamination was evident.

### Example 36

A symmetrical nine layer structure was extruded and oriented out of hot air at 248°F (120°C) as described above. The resultant 1 mil(25µm) film had the structure: 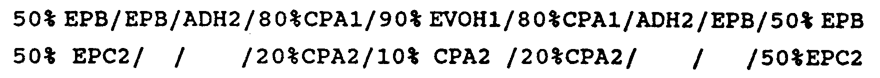 with a layer ratio of 1/3/1/1/1/1/1/3/1. An antifog and an antiblock agent were blended into the ethylene/propylene/butene copolymer of the outer skin layers. Some delamination was evident.

### Example 37

A symmetrical nine layer structure was extruded and oriented out of hot air at 248°F (120°C) as described above. The resultant 1 mil (25µm) film had the structure: 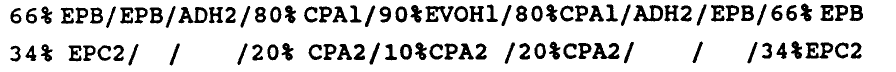 with a layer ratio of 1/3/1/1/1/1/1/3/1. An antifog and an antiblock agent were blended into the ethylene/propylene/butene copolymer of the outer skin layers. The present film structure was difficult to process at the orientation temperature attempted.

### Example 38

A symmetrical nine layer structure was extruded and oriented out of hot air at 249°F (121°C) as described above. The resultant 1 mil (25µm) film had the structure: 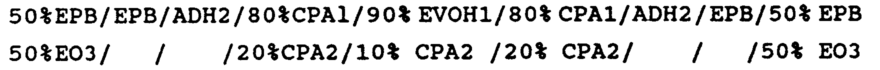 with a layer ratio of 1/3/1/1/1/1/1/3/1. An antifog and an antiblock agent were blended into the ethylene/propylene/butene copolymer of the outer skin layers. The present film structure was difficult to process at the orientation temperature attempted.

### Example 39

A symmetrical nine layer structure was extruded and oriented out of hot air at 249°F (121°C) as described above. The resultant 1 mil (25µm) film had the structure: 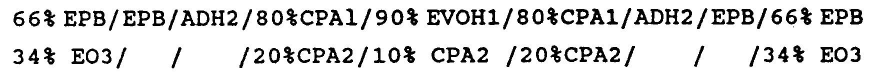 with a layer ratio of 1/3/1/1/1/1/1/3/1. An antifog and an antiblock agent were blended into the ethylene/propylene/butene copolymer of the outer skin layers. Some delamination was evident.

### Example 40

A symmetrical nine layer structure was extruded and oriented out of hot air at 249°F (121°C) as described above. The resultant 1 mil (25µm) film had the structure: 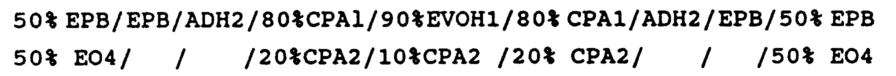 with a layer ratio of 1/3/1/1/1/1/1/3/1. An antifog and an antiblock agent were blended into the ethylene/propylene/butene copolymer of the outer skin layers. The present film was easily processed but displayed poor optical qualities.

### Example 41

A symmetrical nine layer structure was extruded and oriented out of hot air at 249°F (121°C) as described above. The resultant 1 mil (25µm) film had the structure: 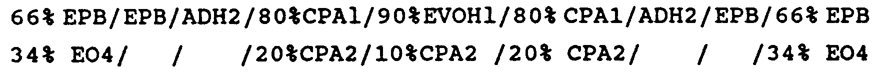 with a layer ratio of 1/3/1/1/1/1/1/3/1. An antifog and an antiblock agent were blended into the ethylene/propylene/butene copolymer of the outer skin layers. The present film structure was difficult to process at the attempted orientation temperature.

### Example 42

A symmetrical nine layer structure was extruded and oriented out of hot air at 248°F (120°C) as described above. The resultant 1 mil (25µm) film had the structure: 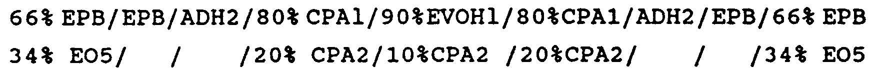 with a layer ratio of 1/3/1/1/1/1/1/3/1. An antifog and an antiblock agent were blended into the ethylene/propylene/butene copolymer of the outer skin layers.

### Example 43

A symmetrical nine layer structure was extruded and oriented out of hot air at 248°F (120°C) as described above. The resultant 1 mil (25µm) film had the structure: 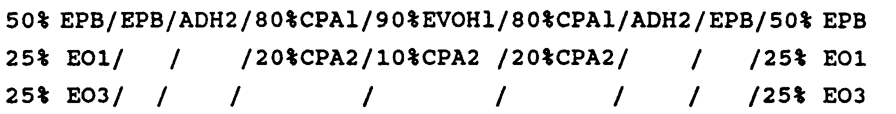 with a layer ratio of 1/3/1/1/1/1/1/3/1. An antifog and an antiblock agent were blended into the ethylene/propylene/butene copolymer of the outer skin layers.

### Example 44

A symmetrical nine layer structure was extruded and oriented out of hot air at 248°F (120°C) as described above. The resultant 1 mil (25µm) film had the structure: 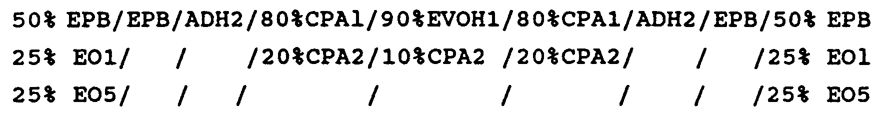 with a layer ratio of 1/3/1/1/1/1/1/3/1. An antifog and an antiblock agent were blended into the ethylene/propylene/butene copolymer of the outer skin layers.

### Examples 45 - 53

The films of Examples 31, 32, 35, 36, 39, 40, and 42 - 44 were tested for tensile strength, elongation, modulus, tear propagation, impact resistance, free shrink (FS) and shrink tension (ST). The results are shown in Table V below where for each structure the values for impact are first given in peak load in pounds and then in energy to break in foot-pounds. For comparative purposes the results of the same tests for Comparative Example 8 shown in Table I, above, are also listed in Table V.

Conversion factors for metric units are as for Table I above.

**Table V**

| Ex. | Film of Ex. # | | Ten. psi x10⁻⁴ | Elong. %x10⁻¹ | Mod. psi x10⁻⁵ | Tear gms. | Impact lb/ft.lb | FS % | ST psi |
|---|---|---|---|---|---|---|---|---|---|
| 45 | 31 | Long | 1.85 | 8.50 | 1.67 | 8.0 | 33.5 | 20 | 412 |
| | | Trans | 1.62 | 9.12 | 1.70 | 4.2 | 0.65 | 27 | 498 |
| 46 | 32 | Long | 1.98 | 8.50 | 1.82 | 4.8 | 31.6 | 21 | 439 |
| | | Trans | 1.61 | 7.88 | 1.86 | 5.8 | 0.60 | 27 | 518 |
| 47 | 35 | Long | 2.00 | 9.95 | 1.72 | 5.7 | 35.9 | 23 | 425 |
| | | Trans | 1.68 | 8.78 | 1.73 | 6.5 | 0.74 | 27 | 513 |
| 48 | 36 | Long | 1.91 | 9.32 | 1.79 | 5.1 | 32.2 | 20 | 410 |
| | | Trans | 1.77 | 8.25 | 1.87 | 4.9 | 0.64 | 26 | 534 |
| 49 | 39 | Long | 1.85 | 9.42 | 1.89 | 6.6 | 35.3 | 22 | 394 |
| | | Trans | 1.70 | 7.27 | 1.97 | 7.7 | 0.74 | 27 | 546 |
| 50 | 40 | Long | 1.82 | 9.85 | 1.70 | 4.8 | 35.9 | 23 | 385 |
| | | Trans | 1.64 | 5.84 | 1.89 | 6.4 | 0.72 | 26 | 489 |
| 51 | 42 | Long | 1.86 | 9.50 | 1.84 | 7.6 | 38.8 | 20 | 400 |
| | | Trans | 1.94 | 7.32 | 2.00 | 7.9 | 0.80 | 26 | 516 |
| 52 | 43 | Long | 1.85 | 9.17 | 1.78 | 5.2 | 34.5 | 21 | 405 |
| | | Trans | 1.78 | 7.11 | 1.85 | 5.8 | 0.69 | 27 | 537 |
| 53 | 44 | Long | 1.73 | 9.18 | 1.71 | 4.9 | 34.6 | 20 | 392 |
| | | Trans | 1.88 | 6.83 | 1.96 | 5.6 | 0.70 | 25 | 531 |
| 14 | 8 | Long | 0.98 | 6.28 | 1.08 | 34.3 | 27.8 | 13 | 255 |
| | | Trans | 0.98 | 6.12 | 1.52 | 30.9 | 0.56 | 28 | 532 |

Table V shows that tensile to break, percent elongation to break, and modulus of the inventive films all are improved over the film of Comparative Example 8. As compared to the physical properties of the films evaluated in Examples 17, 20 and 21, above, the films of present examples which all contain homogeneous ethylene alpha-olefins in the outer skin layers demonstrate some reduction in tensile and modulus values and an increase in the percent elongation. Thus, the addition of the homogeneous ethylene alpha-olefins results in a more flexible film. Some improvement in impact and shrink values is also noted over the films of Examples 17, 20 and 21.

### Example 54

A symmetrical seven layer structure similar to that set forth in Example 3, above, was extruded, irradiated and oriented out of hot air at 253°F (123°C) as described above. The resultant 1 mil (25µm) film had the structure: 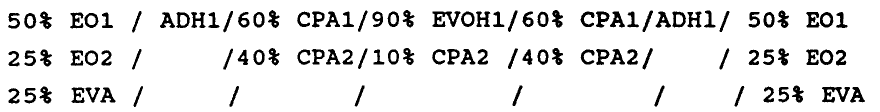 with a layer ratio of 3/1/1/1/1/1/3. The outer skin layers also included minor amounts of an antiblock and an antifog agent. The present film also exhibited poor processability but showed improved optics when compared to the film of Example 3.

### Example 55

A symmetrical seven layer structure similar to that set forth in Example 3, above, was extruded and oriented out of hot air at 245°F (118°C) as described above. The resultant 1 mil (25µm) film had the structure: 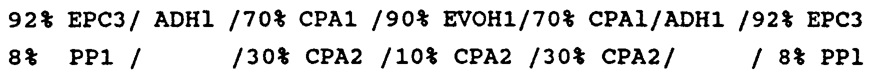 with a layer ratio of 3/1/1/1/1/1/3.

### Example 56

A symmetrical seven layer film having a layer by layer composition identical to that of the film of Example 3 was extruded, irradiated and oriented out of hot air at 245°F (118°C) producing a 1 mil (25µm) film with a layer ratio of 6/2/1/2/1/2/6.

### Example 57

A symmetrical seven layer film having a layer by layer composition identical to that of the film of Example 56 was extruded, irradiated and oriented out of hot air at 240°F (116°C) producing a 1 mil (25µm) film.

### Example 58

A symmetrical seven layer film having a layer by layer composition identical to that of the film of Examples 56 and 57 was extruded, irradiated and oriented out of hot air at 235°F (113°) producing a 1 mil (25µm) film. The reduction in layer thickness of the nylon layer allowed the structure to be oriented at this lower temperature resulting in improved optics and orientability.

### Example 59

A symmetrical seven layer structure was extruded, irradiated and oriented out of hot air at 235°F (113°) as described above. The resultant 1 mil (25µm) film had the structure: 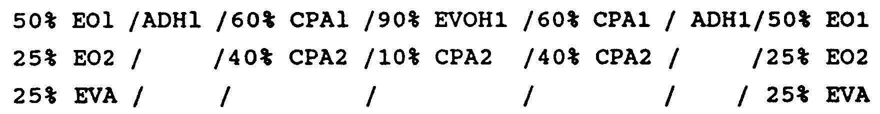 with a layer ratio of 6/2/1/2/1/2/6. That is, the film of the present example was identical in composition and layer ratio to that of Examples 56 - 58 with the exception of the blend ratio for the copolyamides sandwiching the barrier layer. The film was oriented at the same low temperature as the film of Example 58 and, therefore, displayed excellent optical properties as well as an ease of orientability.

### Comparative Example 60

For comparative purposes, a film having the same layer by layer composition and layer ratio as the film of Comparative Example 8 was produced in a 1 mil (25µm) thickness.

### Comparative Example 61

For comparative purposes, a film having the same layer by layer composition as the films of Comparative Examples 8 and 60 was produced in a 1 mil (25µm) thickness but with a layer ratio of 5/1/1/1/5.

### Examples 62 - 68

The films of Examples 54, 55, 58, 59, and 3 and Comparative Examples 60 and 61 were tested for tensile strength, elongation, modulus, tear propagation, impact resistance, free shrink and shrink tension. The results are shown in Table VI below where for each structure the values for impact are first given in peak load in pounds and then in energy to break in foot-pounds. For comparative purposes the results of the same tests for Comparative Example 8 shown in Table I, above, are also listed in Table VI. The conversion factors to metric unity are given in Table I.

**Table VI**

| Ex. | Film of Ex. # | | Ten. psi x10⁻⁴ | Elong. %x10⁻¹ | Mod. psi x10⁻⁵ | Tear gms. | Impact lb/ft.lb | FS % | ST psi |
|---|---|---|---|---|---|---|---|---|---|
| 62 | 54 | Long | 1.24 | 7.46 | 1.49 | 23.0 | 17.4 | 13 | 335 |
| | | Trans | 1.21 | 4.95 | 1.65 | 19.5 | 0.30 | 16 | 450 |
| 63 | 55 | Long | 1.67 | 9.03 | 1.63 | 10.4 | 28.8 | 19 | 487 |
| | | Trans | 1.41 | 8.96 | 1.47 | 13.5 | 0.61 | 23 | 471 |
| 64 | 58 | Long | 1.30 | 7.57 | 1.31 | 9.1 | 21.5 | 18 | 442 |
| | | Trans | 1.09 | 9.25 | 1.28 | 7.9 | 0.45 | 27 | 463 |
| 65 | 59 | Long | 1.36 | 8.53 | 1.13 | 7.9 | 20.5 | 17 | 362 |
| | | Trans | 0.97 | 9.85 | 1.02 | 11.9 | 0.39 | 28 | 505 |
| 66 | 3 | Long | 1.34 | 6.27 | 1.58 | 16.6 | 22.5 | 14 | 369 |
| | | Trans | 1.30 | 4.98 | 1.72 | 32.5 | 0.41 | 17 | 476 |
| 67 | 60 | Long | 1.13 | 7.54 | 1.10 | 17.7 | 16.8 | 15 | 273 |
| | | Trans | 1.02 | 6.27 | 1.07 | 17.1 | 0.30 | 29 | 541 |
| 68 | 61 | Long | 1.14 | 8.81 | 0.87 | 3.7 | 20.2 | 16 | 319 |
| | | Trans | 1.12 | 13.0 | 0.90 | 3.8 | 0.41 | 25 | 457 |
| 14 | 8 | Long | 0.98 | 6.28 | 1.08 | 34.3 | 27.8 | 13 | 255 |
| | | Trans | 0.98 | 6.12 | 1.52 | 30.9 | 0.56 | 28 | 532 |

Table VI shows that tensile to break and modulus values of the films of Examples 3, 54, 55, and 58 are improved over the film of Comparative Example 8.

### Examples 69 - 82

The films of Examples 3, 54, 56, 58, 59 and Comparative Examples 60 and 61 were tested for sealability on an Ilapak Delta P sealing machine. The number of packages made, sealing temperature employed and number and percent of hermetic packages achieved are recorded in Table VII, below.

**Table VII**

| Ex. | Film of Ex. # | Packages | Temp. ( C) | Hermetic Packages |
|---|---|---|---|---|
| 69 | 3 | 25 | 145 | 24 (96%) |
| 70 | | 25 | 150 | 25 (100%) |
| 71 | 54 | 25 | 150 | 24 (96%) |
| 72 | | 25 | 155 | 23 (92%) |
| 73 | 58 | 25 | 155 | 25 (100%) |
| 74 | 56 | 25 | 155 | 17 (68%) |
| 75 | 59 | 42 | 155 | 41 (97%) |
| 76 | | 24 | 160 | 19 (79%) |
| 77 | | 25 | 170 | 21 (84%) |
| 78 | | 25 | 180 | 18 (72%) |
| 79 | 60 | 25 | 145 | 25 (100%) |
| 80 | 61 | 25 | 150 | 7 (28%) |
| 81 | | 25 | 155 | 12 (48%) |
| 82 | | 25 | 180 | 9 (36%) |

### Examples 83 - 87

Films of Examples 3, 54, 58, 59 and Comparative Example 8 were subjected to applications testing for a determination of abuse resistance. Ninety six packages were made manually of each of the two films by wrapping llb (0.45kg) blocks on meat trays with the film, sealing and heat shrinking and were then subjected to vibration testing under ASTM 4728. The results are given in Table VIII below.

**Table VIII**

| Ex. | Film of Ex. # | Total Packages | Total Abuse Failures | Corner Cuts | Edge Cuts | Bottom Abrasions |
|---|---|---|---|---|---|---|
| 83 | 3 | 96 | 9 | 4 | 2 | 1 |
| 84 | 54 | 96 | 12 | 12 | 0 | 0 |
| 85 | 58 | 96 | 23 | 22 | 1 | 0 |
| 86 | 59 | 96 | 20 | 16 | 0 | 4 |
| 87 | 8 | 96 | 9 | 4 | 2 | 1 |

Thus, as was verified above, it is shown that the 1 mil (25m) film of Example 3 is comparable in abuse resistance to the 1.5 millfilm of Comparative Example 8. The film of Example 54 is not significantly less abuse resistant than that of the prior art structure.

### Examples 88 - 92

The films of Examples 3, 54 and Comparative Example 60 were evaluated for antifog characteristics by a water-in-beaker method wherein the film is secured over a beaker of water and examined for fogging at 1 hour, 24 hours and 48 hours. The inventive films were examined for fogging on both the inside surface layer, that is, the layer which formed the inside surface of the bubble during orientation, and the outside surface layer. All of the films were graded on a scale of 1 to 5 with 1 representing a completely fogged film and 5 representing a completely clear film in a double blind study. The results are set forth in Table IX below.

**Table IX**

| Ex. | Film of Ex. # | 1 hour | 24 hours | 48 hours |
|---|---|---|---|---|
| 88 | 3 (inside) | 4.22 | 4.78 | 4.94 |
| 89 | (outside) | 3.89 | 4.72 | 4.72 |
| 90 | 54 (inside) | 4.11 | 4.78 | 4.78 |
| 91 | (outside) | 4.17 | 4.83 | 4.67 |
| 92 | 60 | 3.06 | 3.72 | 3.78 |

Thus, the inventive films exhibited improved antifog characteristics over the comparative prior art structure.

### Examples 93 - 96

The films of Examples 3 and 54 and Comparative Examples 8 and 60 were tested for haziness in a double blind study and were scored on a scale of 1 to 4 with 1 indicating the greatest degree of haziness and 4 indicating the most clear film. The results are set forth in Table X below.

**Table X**

| Ex. | Film of Ex. # | Average Rank |
|---|---|---|
| 93 | 3 | 2.04 |
| 94 | 54 | 1.71 |
| 95 | 8 | 2.79 |
| 96 | 60 | 3.46 |

Here the inventive films scored significantly lower than the 1 mil prior art film of Comparative Example 60. However, the film of Example 3 was only slightly more hazy than the film of Comparative Example 8, that is, the 1.5 mil (38µm) version of the prior art structure which must be employed in order to achieve abuse resistance comparable to those of the present inventive structures.

The foregoing description of preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated.

## Claims

1. A multilayer, heat shrinkable film comprising:
a barrier layer;
two core layers adhered to the barrier layer, each of said core layers comprising a blend of two differing copolyamides; and
sealable outer polymeric skin layers.

2. A film according to claim 1 wherein each of the core layers comprise a blend of a first copolyamide and a second copolyamide, said first copolyamide having a melting temperature at least 50°F (28°C) greater than the melting temperature of the second copolyamide.

3. A film according to claim 2 wherein said second copolyamide has a melting temperature of less than 320°F (160°C).

4. A film according to claim 2 or claim 3 wherein said first copolyamide is nylon 6,66, said first polyamide preferably being present in an amount in the range 50 to 90% by weight of the core layer.

5. A film according to any of claims 2 to 4 wherein said second copolyamide is nylon 6,12, said second copolyamide preferably being present in an amount in the range 50 to 10% by weight of the core layer.

6. A film according to any preceding claim wherein said barrier layer comprises an ethylene vinyl alcohol copolymer.

7. A film according to claim 6 wherein said barrier layer comprises a blend of ethylene vinyl alcohol copolymer and a copolyamide.

8. A film according to claim 7 wherein said copolyamide is substantially equivalent in chemical composition to one of the copolyamides in the core layers and is preferably nylon 6,12.

9. A film according to claim 1 wherein said two core layers are directly adhered to said barrier layer without a tie layer, adhesive, or other layer therebetween.

10. A film according to any preceding claim wherein said outer skin layers comprise a propylene-based polymer, preferably an ethylene propylene copolymer, wherein said ethylene propylene copolymer comprises, for instance, from 90% to 99% by weight of propylene and from 1% to 10% by weight of ethylene, or wherein said ethylene propylene copolymer comprises an ethylene propylene butene terpolymer.

11. A film according to claim 10 wherein said outer skin layers further include a propylene homopolymer, and optionally also further additives elected from antiblock and antifog agents.

12. A film according to any preceding claim wherein said outer skin layers comprise at least one ethylene alpha-olefin copolymer, preferably a blend comprising at least one ethylene alpha-olefin copolymer and an ethylene vinyl acetate copolymer or a blend comprising two differing ethylene octene copolymers and an ethylene vinyl acetate copolymer.

13. A film according to any preceding claim further including adhesive layers between each of the core copolyamide blend layers and the outer skin layers.

14. A film according to any preceding claim which is less than 38µm thick, preferably about 25µm thick.

15. A film according to any preceding claim which is biaxially oriented.

16. A film according to any preceding claim which is symmetrical.

17. A process for forming a heat shrinkable film by coextruding a multilayer film comprising a barrier layer
two core layers adhered to the barrier layer, each of said core layers comprising a blend of two differing copolyamides; and sealable outer polymeric layers and then orienting the multilayer film.

18. A process according to claim 17 in which the multilayer film is oriented biaxially, preferably at ratios in the range 3.4 to 3.6 in the longitudinal direction and 3.0 to 3.6 in the transverse direction.

19. A process according to claim 17 or claim 18 in which the multilayer film is oriented at a temperature of more than 113°C and up to 125°C, preferably in the range 116 to 124°C.

20. A process according to any of claims 17 to 19 wherein each of the core layers comprise a blend of a first copolyamide and a second copolyamide, said first copolyamide having a melting temperature at least 50°F (28°C) greater than the melting temperature of the second copolyamide.

21. Use of a film according to any of claims 1 to 16 in a packaging process in which sealable outer layers are heat sealed to one another and the film around the sealed package is heat shrunk.

## Patentansprüche

1. Mehrschichtige, wärmeschrumpfbare Folie, die:
eine Sperrschicht,
zwei Kernschichten, die an der Sperrschicht haften, wobei jede dieser Kernschichten eine Mischung aus zwei verschiedenen Copolyamiden umfaßt, und
siegelbare äußere polymere Hautschichten umfaßt.

2. Folie nach Anspruch 1, bei der jede der Kernschichten eine Mischung aus einem ersten Copolyamid und einem zweite Copolyamid umfaßt, wobei das erste Copolyamid eine Schmelztemperatur aufweist, die mindestens 50 °F (28 °C) größer ist als die Schmelztemperatur des zweiten Copolyamids.

3. Folie nach Anspruch 2, bei der das zweite Copolyamid eine Schmelztemperatur von weniger als 320 °F (160 °C) aufweist.

4. Folie nach Anspruch 2 oder Anspruch 3, bei der das erste Copolyamid Nylon 6,66 ist, wobei das erste Polyamid vorzugsweise in einer Menge im Bereich von 50 bis 90 Gew.-% der Kernschicht vorhanden ist.

5. Folie nach einem der Ansprüche 2 bis 4, bei der das zweite Copolyamid Nylon 6,12 ist, wobei das zweite Copolyamid vorzugsweise in einer Menge im Bereich von 50 bis 10 Gew.-% der Kernschicht vorhanden ist.

6. Folie nach einem der vorhergehenden Ansprüche, bei der die Sperrschicht Ethylen/Vinylalkohol-Copolymer umfaßt.

7. Folie nach Anspruch 6, bei der die Sperrschicht eine Mischung aus Ethylen/Vinylalkohol-Copolymer und Copolyamid umfaßt.

8. Folie nach Anspruch 7, bei der das Copolyamid im wesentlichen äquivalent in der chemischen Zusammensetzung zu einem der Copolyamide in den Kernschichten ist und vorzugsweise Nylon 6,12 ist.

9. Folie nach Anspruch 1, bei der die beiden Kernschichten direkt an der Sperrschicht haften, wobei dazwischen keine Klebeschicht, kein Klebstoff oder eine andere Schicht vorhanden ist.

10. Folie nach einem der vorhergehenden Ansprüche, bei der die äußeren Hautschichten auf Propylen basierendes Polymer, vorzugsweise Ethylen/Propylen-Copolymer umfassen, wobei das Ethylen/Propylen-Copolymer beispielsweise 90 bis 99 Gew.-% Propylen und 1 bis 10 Gew.-% Ethylen umfaßt, oder bei der das Ethylen/Propylen-Copolymer Ethylen/Propylen/Buten-Terpolymer umfaßt.

11. Folie nach Anspruch 10, bei der die äußeren Hautschichten ferner Propylenhomopolymer und ebenfalls gegebenenfalls ferner Additive enthalten, die aus Antiblocking- und Antinebelmitteln ausgewählt sind.

12. Folie nach einem der vorhergehenden Ansprüche, bei der die äußeren Hautschichten mindestens ein Ethylen-α-olefin-Copolymer, vorzugsweise eine Mischung aus mindestens einem Ethylen-α-olefin-Copolymer und einem Ethylen/Vinylacetat-Copolymer oder eine Mischung aus zwei verschiedenen Ethylen/Octen-Copolymeren und einem Ethylen/Vinylacetat-Copolymer umfaßt.

13. Folie nach einem der vorhergehenden Ansprüche, die ferner Klebstoffschichten zwischen jeder der Kernpolyamidmischungsschichten und den äußeren Hautschichten umfaßt.

14. Folie nach einem der vorhergehenden Ansprüche, die weniger als 38 µm dick ist, vorzugsweise etwa 25 µm dick ist.

15. Folie nach einem der vorhergehenden Ansprüche, die biaxial orientiert ist.

16. Folie nach einem der vorhergehenden Ansprüche, die symmetrisch ist.

17. Verfahren zur Bildung einer wärmeschrumpfbaren Folie durch Koextrusion einer Mehrschichtfolie, die eine Sperrschicht, zwei Kernschichten, die an der Sperrschicht haften, wobei jede dieser Kernschichten eine Mischung aus zwei verschiedenen Copolyamiden umfaßt, und siegelbare äußere polymere Schichten umfaßt, und anschließende Orientierung der Mehrschichtfolie.

18. Verfahren nach Anspruch 17, bei dem die Mehrschichtfolie biaxial orientiert ist, vorzugsweise in Verhältnissen im Bereich von 3,4 bis 3,6 in Längsrichtung und 3,0 bis 3,6 in Querrichtung.

19. Verfahren nach Anspruch 17 oder Anspruch 18, bei dem die Mehrschichtfolie bei einer Temperatur von mehr als 113 °C und bis zu 125 °C, vorzugsweise im Bereich von 116 bis 124 °C orientiert wird.

20. Verfahren nach einem der Ansprüche 17 bis 19, bei dem jede der Kernschichten eine Mischung aus einem ersten Copolyamid und einem zweiten Copolyamid umfaßt, wobei das erste Copolyamid eine Schmelztemperatur aufweist, die mindestens 50 °F (28 °C) größer ist als die Schmelztemperatur des zweiten Copolyamids.

21. Verwendung einer Folie nach einem der Ansprüche 1 bis 16 in einem Verpackungsverfahren, bei dem siegelbare Außenschichten aufeinander hitzegesiegelt werden und die Folie um die versiegelte Packung herum hitzegeschrumpft wird.

## Revendications

1. Film multicouche, rétrécissable thermiquement comprenant :
une couche barrière;
deux couches de coeur adhérées à la couche barrière, chacune desdites couches de coeur comprenant un mélange de deux copolyamides différents; et
des couches de peau polymériques externes scellables.

2. Film selon la revendication 1 dans lequel chacune des couches de coeur comprend un mélange d'un premier copolyamide et d'un second copolyamide, ledit premier copolyamide ayant une température de fusion d'au moins 50°F (28°C) supérieure à la température de fusion du second copolyamide.

3. Film selon la revendication 2 dans lequel ledit second copolyamide a une température de fusion inférieure à 320°F (160°C).

4. Film selon la revendication 2 ou la revendication 3 dans lequel ledit premier copolyamide est un nylon 6,66, ledit premier polyamide étant de préférence présent en une quantité dans l'intervalle de 50 à 90% en poids de la couche de coeur.

5. Film selon l'une quelconque des revendications 2 à 4 dans lequel ledit second copolyamide est du nylon 6,12, ledit second copolyamide étant de préférence présent en une quantité dans l'intervalle de 50 à 10% en poids de la couche de coeur.

6. Film selon l'une quelconque des revendications précédentes dans lequel ladite couche barrière comprend un copolymère d'éthylène alcool vinylique.

7. Film selon la revendication 6 dans lequel ladite couche barrière comprend un mélange d'un copolymère d'éthylène alcool vinylique et d'un copolyamide.

8. Film selon la revendication 7 dans lequel ledit copolyamide est substantiellement équivalent en composition chimique à un des copolyamides dans les couches de coeur et est de préférence du nylon 6,12.

9. Film selon la revendication 1 dans lequel les deux couches de coeur sont directement adhérées à ladite couche barrière sans couche de liaison, adhésive ou autre couche entre elles.

10. Film selon l'une quelconque des revendications précédentes dans lequel lesdites couches de peau externes comprennent un polymère à base de propylène, de préférence un copolymère d'éthylène propylène, où ledit copolymère d'éthylène propylène comprend, par exemple, de 90 à 99% en poids de propylène et de 1% à 10% en poids d'éthylène, ou où ledit copolymère d'éthylène propylène comprend un terpolymère d'éthylène propylène butène.

11. Film selon la revendication 10 dans lequel lesdites couches de peau externes incluent de plus un homopolymère de propylène, et optionnellement également des additifs supplémentaires choisis parmi les agents anti-bloquants et anti-buée.

12. Film selon l'une quelconque des revendications précédentes dans lequel lesdites couches de peau externes comprennent au moins un copolymère d'éthylène alpha-oléfine, de préférence comprenant un mélange comprenant au moins un copolymère d'éthylène alpha-oléfine et un copolymère d'éthylène acétate de vinyle ou un mélange comprenant deux copolymères différents d'éthylène octène et un copolymère d'éthylène acétate de vinyle.

13. Film selon l'une quelconque des revendications précédentes incluant de plus des couches adhésives entre chacune des couches du mélange de copolyamides de coeur et les couches de peau externes.

14. Film selon l'une quelconque des revendications précédentes qui a une épaisseur inférieure à 38 µm, de préférence une épaisseur d'environ 25 µm.

15. Film selon l'une quelconque des revendications précédentes qui est orienté biaxialement.

16. Film selon l'une quelconque des revendications précédentes qui est symétrique.

17. Procédé pour former un film rétrécissable thermiquement par coextrusion d'un film multicouche comprenant une couche barrière
deux couches de coeur adhérées à la couche barrière, chacune desdites couches de coeur comprenant un mélange de deux copolyamides différents; et des couches polymériques externes scellables et ensuite orientation du film multicouche.

18. Procédé selon la revendication 17 dans lequel le film multicouche est orienté biaxialement, de préférence en des rapports dans l'intervalle de 3,4 à 3,6 dans la direction longitudinale et de 3,0 à 3,6 dans la direction transversale.

19. Procédé selon la revendication 17 ou la revendication 18 dans lequel le film multicouche est orienté à une température supérieure à 113°C et jusqu'à 125°C, de préférence dans l'intervalle de 116 à 124°C.

20. Procédé selon l'une quelconque des revendications 17 à 19 dans lequel chacune des couches de coeur comprend un mélange d'un premier copolyamide, et d'un second copolyamide, ledit premier copolyamide ayant une température de fusion d'au moins 50°F (28°C) supérieure à la température de fusion du second copolyamide.

21. Utilisation d'un film selon l'une quelconque des revendications 1 à 16 dans un procédé d'emballage dans lequel les couches externes scellables sont scellées thermiquement l'une à l'autre et le film autour de l'emballage scellé est rétréci thermiquement.
